# EUROPEAN PATENT SPECIFICATION

(11) **EP 1 446 797 B1**
(45) Date of publication and mention of the grant of the patent: **23.05.2007**
(21) Application number: 02775085.0
(22) Date of filing: 10.10.2002
(51) Int. Cl.: G10L 21/02

(54) **METHOD OF TRANSMISSION OF WIDEBAND AUDIO SIGNALS ON A TRANSMISSION CHANNEL WITH REDUCED BANDWIDTH**
VERFAHREN ZUR ÜBERTRAGUNG BREITBANDIGER TONSIGNALE ÜBER EINEN ÜBERTRAGUNGSKANAL MIT VERMINDERTER BANDBREITE
PROCEDE DE TRANSMISSION DE SIGNAUX AUDIO A LARGE BANDE SUR UNE VOIE DE TRANSMISSION A LARGEUR DE BANDE REDUITE

(30) Priority: 25.10.2001 EP 01204075
(43) Date of publication of application: 18.08.2004
(73) Proprietor: Koninklijke Philips Electronics N.V., 5621 BA Eindhoven (NL)
(72) Inventor: TAORI, Rakesh, NL-5656 AA Eindhoven (NL); GERRITS, Andreas, J., NL-5656 AA Eindhoven (NL); SLUIJTER, Robert, J., NL-5656 AA Eindhoven (NL)
(74) Representative: Groenendaal, Antonius W. M.
(86) International application number: PCT/IB2002/004260
(87) International publication number: WO 2003/036624

(56) References cited:
- DE-A- 3 418 297
- VEEN VAN DER M ET AL: "ROBUST, MULTI-FUNCTIONAL AND HIGH-QUALITY AUDIO WATERMARKING TECHNOLOGY" PREPRINTS OF PAPERS PRESENTED AT THE AES CONVENTION, XX, XX, vol. 110, no. 5345, 12 May 2001 (2001-05-12), pages 1-9, XP001086463 cited in the application

## Description

The invention relates to a method for processing a wide-band audio signal into a narrow-band audio signal comprising substantially the same information as the wide-band audio signal, where a first spectral portion of the wide-band audio signal is maintained substantially unchanged in the narrow-band audio signal and restoring information usable for restoring the remaining spectral portions of the wide-band audio signal is embedded into said first spectral portion, as a watermark carrying said restoring information as a payload. By such a processing of wide-band audio signals narrow-band audio signals are provided suitable for transmission over narrow-band infrastructure such as telephone networks.

The invention also relates to an encoder for coding a wide-band audio signal into a narrow-band audio signal comprising substantially the same information as the wide-band audio signal, comprising: a filter for extracting a first spectral portion from the wide-band audio signal; an information generating circuit for extracting restoring information from the wide-band audio signal or from remaining spectral portions of the wide-band audio signal, said information being usable for restoring said remaining spectral portions of the wide-band audio signal; an embedder for embedding said restoring information in said first spectral portion, in the form of a watermark carrying said restoring information as a payload, for the obtainment of said narrow-band audio signal.

Further the invention relates to a decoder for decoding a narrow-band audio signal containing restoring information usable for processing the signal into a corresponding wide-band audio signal comprising: an extractor for extracting said restoring information, a restoring circuit for restoring one or more spectral audio signal portions using said restoring information and merging said spectral audio signal portions with said narrow-band audio signal for the obtainment of said corresponding wide-band audio signal.

Such a method, encoder and decoder are known from German Patent Application No. DE 34 18 297.

The wide-band audio signal is divided into a low frequency band and a high frequency band. The high frequency band is divided into a number of sub-bands and the momentary signal power value is determined for each of the sub-bands. Information on the momentary signal power distribution over these sub-bands is provided in the form of a multiplication factor identifying the magnitude of the greatest of said power values as well as the relative signal power values of the rest of the sub-bands. This information is converted into a digital word which is transmitted together with said low frequency band *via* an ordinary narrow-band transmission channel, the information being embedded in the low frequency band signal in the form of a pilot signal which is at or below a lowest perceptible sound level.

It is a disadvantage of this method that the pilot signal containing the information of the high frequency band is not established on a true unambiguous basis, in that the pilot signal is provided on the basis of a signal power distribution only. Hence at occasions, the disclosed method will most probably provide same output for different inputs and thus false supplemental spectral components, in such cases leading to a degradation of the narrow band signal rather than an improvement.

From the conference paper C. McElroy *et al.:* "Wideband Speech Coding in 7.2 kb/s", 1993 IEEE International Conference on Acoustics, Speech, and Signal Processing, April 27-30, 1993 (ICASSP-93), Minneapolis, Minnesota (US), a method for coding a wide-band speech signal into a medium bit-rate signal is known.

Again, the wide band signal is divided into a low frequency band and a high frequency band. These bands are encoded into each their bit stream using each their encoder; the low frequency band is encoded using a known CELP (Code Excited Linear Prediction) coder, and the high frequency band is encoded using a second order linear predictor and a very low bit rate gain shape vector quantiser.

The two bit streams are then merged using a specific syntax; the result is a digital signal having a bit rate of 7.2 kb/s. Said syntax has to be used at the remote end for dividing the bit stream into a high-band bit stream and a low-band bit stream before the bit streams are decoded into a high-band and low-band audio signal, respectively, and then merged into the desired wide-band speech signal.

It is a disadvantage of this method that the resulting bit stream is not suitable for being transmitted through existing narrow-band networks such as telephone trunks or lines, or telephone exchanges.

From European Patent No. 658,874, a method and a circuit for widening the bandwidth of a narrow-band audio signal is known.

In this patent, a narrow-band audio signal is analysed by means of short-term spectral analysis; the resulting spectrum is compared to stored spectra; and the resulting spectrum is supplemented with spectral components not contained in the resulting spectrum.

Both the resulting and the stored spectra are coded in a linear predictive manner (LPC; Linear Predictive Coding). The stored spectra are broad-band, and are used immediately to determine the spectral components to be used as supplements to the narrow-band signal. The amplitude of the stored spectra is adjusted so as to achieve a maximum of matching between the stored spectra in the narrow frequency band and the narrow-band audio signal.

It is a disadvantage of said method and circuit that the spectral components which are obtained from the stored spectra and added to the narrow-band signal, are not established on a true unambiguous basis, in that the spectral components to be added are determined from comparing the analysed spectrum to a finite number of spectra only. Hence at occasions, the disclosed method and circuit will most probably provide incorrect supplemental spectral components, leading to a degradation of the narrow band signal rather than an improvement.

From the convention paper Michiel van der Veen et al.: "Robust, MultiFunctional and High-Quality Audio Watermarking Technology", Audio Engineering Society, 110^{th} Convention 12-15 May 2001, Amsterdam (NL), methods are known for embedding a watermark carrying a payload into an audio signal, and for detection the presence and extracting the payload of such watermarks.

Based on existing technology used in image and video watermarking, a robust, multifunctional and high-quality audio watermarking technique is presented in the paper. The embedding algorithm operates in the frequency domain, where the magnitudes of the Fourier coefficients are slightly modified. Watermark detection relies on cross-correlation techniques, in which not only the presence of a watermark, but also its payload is detected.

Experiments demonstrated that for a particular watermark disclosed in said paper, objective and subjective audio quality measures correlate fairly well. Combined analyses of the perceived audio quality and robustness indicated that specific watermark parameters may be optimised for different applications. These range from copy management (limited information capacity, high robustness, and very high audio quality) to broadcast monitoring (intermediate to large information capacity, intermediate robustness, intermediate to high audio quality).

It is an object of the invention to provide high quality coding of wide-band audio signals into narrow-band audio signals and corresponding decoding, as well as related facilities such as equipment for carrying out necessary processes.

To this effect the method according to the invention is characterized in that the watermark is embedded into said first spectral portion by: providing said first spectral portion and said remaining spectral portions in digital form; organising said first spectral portion into frames ; Fourier transforming said frame; modifying the Fourier coefficients in dependence of said watermark; and inverse Fourier transforming the modified Fourier coefficients for the obtainment of a time domain, watermarked frame.

Experiments with signals according to embodiments of the invention have shown that the information contained in a wide-band audio signal outside the bandwidth of a corresponding narrow-band audio signal may be embedded in quite small distortions of the narrow-band audio signal.

Experiments have further shown that reliable extraction of information embedded in a narrow-band audio signal as distortions is possible by cross-correlation methods in a reliable way.

Preferably, the coded narrow-band audio signal is compatible with existing narrow-band equipment and infrastructure, such that i.a. 1) the narrow-band audio signal shall be transmittable through existing narrow-band infrastructure and recordable and/or storable by means of existing narrow-band equipment without quality degradation or loss of wide-band information, and 2) the narrow-band audio signal shall be receivable and reproducible in narrow-band form by existing narrow-band equipment without significant quality degradation of the narrow-band contents of the signal.

A narrow-band audio signal thus distorted may be made compatible with a narrow-band signal infrastructure such as telephone connections, as distortions within the bandwidth of the narrow-band audio signal will pass unaffected through said infrastructure.

When a narrow-band audio signal is stored on a storage medium, it will occupy a smaller space than a corresponding wide-band audio signal and hence, appear as a compressed version of the wide-band audio signal, saving storage space.

It is an advantage that such a stored, compressed signal may be made readily readable by conventional, narrow-band equipment, thus ensuring backwards compatibility when e.g. introducing new storage media for audio signals.

Said information is embedded into the narrow-band audio signal as a watermark, preferably in a perceptually inaudible way. Hereby, available circuits and methods for watermarking audio signals can be utilised when producing the narrow-band audio signal.

Essentially the full audio information contents of a wide-band audio signal may be included in the narrow-band audio signal.

Experiments have further shown that recognisable distortions which are near to inaudible or perceptually inaudible may be made to contain sufficient amounts of information to enable reliable, high-quality reconstruction of the remaining spectral portions of the wide-band audio signal.

Use of this watermark embedding scheme have proved to provide a robust watermark capable of carrying the desired payload containing the restoring information.

In a preferred embodiment, that said narrow-band audio signal is reprocessed into a wide-band audio signal, preferably after transmitting said narrow-band audio signal through a transmission channel or storing it on a storage medium.

In this way, increased benefit is had from the invention in that high-quality audio signals can readily be transmitted over existing, narrow-band infrastructure without any amendments to the infrastructure being necessary.

In an encoder for coding a wide-band audio signal into a narrow-band audio signal comprising substantially the same information as the wide-band audio signal, the object of the invention is met in that the encoder of the above-mentioned type comprises:
- an extrapolator for extrapolating said first spectral portion into an extrapolated audio signal having frequency limits substantially corresponding to those of the wide-band audio signal; and
- a comparator for comparing said extrapolated audio signal to the wide-band audio signal and providing said restoring information in dependence of the comparison.

In this way, the extracted first spectral portion is reprocessed into a wide-band audio signal by means of a rather primitive form of signal processing. Thus, the extrapolated (wide-band) audio signal provided will not meet the desired level of quality but will be provided using a modest amount of signal processing power.

As this extrapolated audio signal will be deterministic relative to the original wide-band audio signal, it need not be transmitted along with the narrow-band audio signal, and only the difference between the wide-band audio signal and the extrapolated audio signal need to be embedded into the first spectral portion. In this way, the processing power requirements to the embedder may be decreased.

In a decoder for decoding a narrow-band audio signal containing restoring information usable for processing the signal into a corresponding wide-band audio signal, the object of the invention is met by the decoder of the above-mentioned type comprising:
- an extrapolator for extrapolating said narrow-band audio signal into an extrapolated audio signal having frequency limits substantially corresponding to those of the corresponding wide-band audio signal; and
- a corrector for modifying characteristics of said extrapolator in dependence of said restoring information, the corrector preferably being incorporated into the extrapolator.

In this way, the extrapolation provides a substantial part of the remaining spectral portions of the original wide-band audio signal using a modest amount of signal processing power. Thus, only the difference between the wide-band audio signal and the extrapolated audio signal needs to be restored from the recognisable distortions embedded into the first spectral portion. In this way, the processing power requirements to the extractor may be decreased.

In a system for transmitting a wide-band audio signal through a narrow-band transmission channel, the object of the invention is met by the system comprising an encoder according to the invention at the transmitting end for processing the wide-band audio signal into a narrow-band audio signal, and a decoder according to the invention at the receiving end for reprocessing said narrow-band audio signal into a wide-band audio signal.

By these measures, a complete system for transmitting wide-band audio signals is established without the need of upgrading the very transmission channel from narrow-band to wide-band status. Thus, new systems only have to be installed at the transmitting and the receiving ends of the entire transmission channel.

According to embodiments of the invention, such new installations may preferably be impermanent, in that they may be installed for the purpose of one or a few transmissions, such as for high-quality transmission of radio programmes over telephone lines, or they may be incorporated into apparatus such as telephone sets or mobile phones connected to the public telephone network, thus providing subscribers with enhanced transmission quality when connected to distant apparatus having the same facilities.

As a narrow-band audio signal will occupy a smaller storage space in the storage medium than a wide-band audio signal, the effective capacity of any storage medium for storage of audio signals is significantly increased.

A system according to an embodiment of the invention for storage and retrieval will of course have to be provided when using such a storage medium, but as only one such system need to be provided regardless of the capacity of the storage medium, the economic profit will be large for storage media having larger capacities.

It lies within the scope of the invention and the claims to use other frequency limits for the narrow-band audio signal or the first spectral portion, respectively, for storage purposes than for transmission purposes.

For transmission purposes, the narrow-band audio signal will preferably be given the same frequency limits as the transmission channel, thus reducing the amount of information to be embedded in the first spectral portion.

For storage purposes, however, frequency limits of the narrow-band audio signal of the invention providing the greatest ratio of compression for a desired level of playback quality using the storage system of the invention will not necessarily be the same as said preferred frequency limits for transmission purposes.

Below, the invention will be explained in more detail by means of embodiment examples and with reference to the drawings, in which
Fig. 1 illustrates the principle of an encoder according to an embodiment the invention;
Fig. 2 illustrates the principle of a decoder according to an embodiment of the invention;
Fig. 3 shows a schematic diagram of a preferred embodiment of the encoder in Fig. 1; and
Fig. 4 shows a schematic diagram of a preferred embodiment of the decoder in Fig. 2.

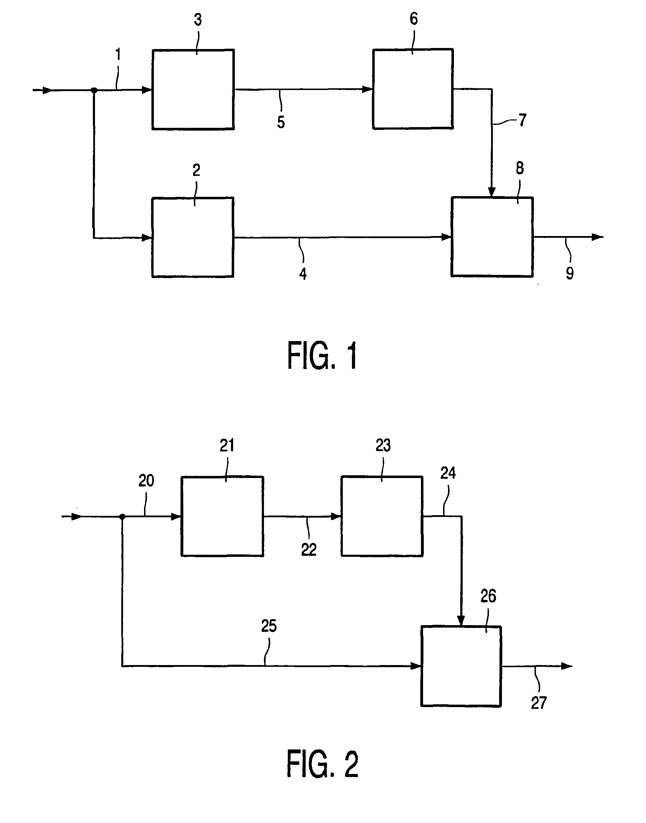

In Fig. 1, a wide-band audio signal 1 is present at an input terminal. The signal is carried to the inputs of two filters, a band-pass filter 2 and a band-stop filter 3. The band-pass filter 2 lets through a first spectral portion of the wide-band audio signal, and this portion constitutes a narrow-band audio signal 4. The frequency limits or cut-off frequencies for the band-pass filter 2 can e.g. be 300 Hz and 3.4 kHz, respectively. The narrow-band audio signal 4 will have frequency limits corresponding to the frequency limits of the filter 2.

Preferably, the frequency limits or cut-off frequencies of the band-stop filter 3 correspond to those of the band-pass filter 2. Hereby, the band-stop filter 3 will let through the remaining spectral portions 5 of the wide-band audio signal 1 not contained in the narrow-band audio signal 4.

The wide-band audio signal 1 may e.g. be a full-band audio signal ranging from 20 or 100 Hz to 10 or 20 kHz. In that case, the band-stop filter 3 would have the same cut-off frequencies as the band-pass filter 2, e.g. 300 Hz and 3.4 kHz. The remaining spectral portions 5 would then be constituted by the frequency bands from 20 or 100 Hz to 300 Hz, and from 3.4 kHz to 10 or 20 kHz.

The wide-band audio signal 1 could as well be a medium-band speech signal containing frequencies from, say 300 Hz to 8 kHz; in that case, the remaining spectral portions 5 will be the frequency band from 3.4 kHz to 8 kHz, and the band-stop filter 3 would be replaced by a 3.4 kHz high-pass filter.

The remaining spectral portions 5 are processed by an information generator or an information generating circuit 6. This circuit 6 delivers information 7 in a suitable format on the contents of the remaining spectral portions 5 to an embedder 8. According to the invention, said information 7 is suitable as a basis for restoring the remaining spectral portions 5, but constitutes preferably a smaller amount of information than the remaining spectral portions 5 themselves.

The embedder 8 embeds the information 7 into the first spectral portion 4 without increasing the frequency range of said portion 4 and preferably in a perceptually inaudible way, and the output from the embedder 8 thus constitutes a narrow-band audio signal 9 having frequency limits corresponding to the cut-off frequencies of the band-pass filter 2.

Several usable methods for such embedding exist, one preferred method being watermarking, where the information 7 is preferably embedded as the "payload" of a watermark.

One object of the encoder in Fig. 1 is to have the information 7 embedded into the first spectral portion in such a way that the full information 7 is unambiguously recoverable from the signal 9, and that at the same time it is ensured that this embedded information in the narrow-band audio signal 9 cannot be heard or, at least, will not significantly disturb a person listening to the narrow-band audio signal 9.

As the narrow-band audio signal 9 does not contain frequencies outside the frequency limits of the band-pass filter 2, it will readily be processible or transmittable by any infrastructure designed to handle narrow-band audio signals. In the case mentioned, where the frequency limits of the band-pass filter 2 and hence of the narrow-band audio signal 9 were 300 Hz and 3.4 kHz, respectively, the narrow-band audio signal 9 may be transmitted through e.g. the public telephone system without significant spectral degradation.

Turning now to Fig. 2, a coded narrow-band audio signal 20 such as the signal 9 in Fig. 1 is present at an input terminal. The narrow-band audio signal 20 is carried to an extractor 21 where embedded information 22 is extracted from the signal. This information is e.g. corresponding to the information 7 in Fig. 1, and is preferably present in the signal 20 as a watermark. Methods and equipment are known *per se* for such extraction of embedded information.

On the basis of this information 22, remaining spectral portions 24 are restored by a restorer 23. These spectral portions are merged with the narrow-band audio signal 20 in a merging circuit 26 to obtain a wide-band audio signal 27. This signal 27 is e.g. corresponding to the wide-band audio signal 1 in Fig. 1.

The encoder of Fig. 1 and the decoder of Fig. 2 are e.g. and preferably brought into action at a transmission end and a receiving end, respectively, of a narrow-band transmission channel such as a telephone line.

Now, to the extent that such a transmission channel maintains the quality of a transmitted narrow-band audio signal, and to the extent that the information generation (6) and embedding (7) in Fig. 1 followed by the extracting (21) and restoration (23) in Fig. 2 maintain the quality of the remaining spectral portions of the wide-band audio signal 1, this wide-band signal may now be transmitted via a narrow-band transmission channel and recovered again as described without significant loss of quality, in particular spectral quality.

The choice of modulation and demodulation principles used in such a transmission channel will not affect the transmissibility of the narrow-band audio signal of the invention.

Such modulation may e.g. be usage of the GSM mobile telephone network or a traditional analog telephone network. In case of the former, the modulator may be the GSM mobile phone at the transmitting end and the demodulator may be the GSM mobile phone at the receiving end. Along the transmission channel, several types of modulation may now be used.

For example, the connection between the GSM net serving the mobile phone at the transmitting end may be connected to the GSM net serving the mobile phone at the receiving end through a traditional long-distance analog telephone network using traditional forms of analog modulation.

It is evident that such transmission of wide-band audio signals through existing narrow-band infrastructure will provide large economical benefits. The public telephone system provides an almost universally distributed transmission system for standardised narrow-band audio signals. The use of this system for any transmission of wide-band audio signals will render specialised transmission services for wide-band audio signals dispensable in a vast majority of circumstances and hence save investments.

It is a distinct advantage of the invention that the coded narrow-band audio signal 9, 20 is directly compatible with existing, traditional narrow-band audio signal processing methods and equipment. As mentioned, the embedded information is preferably inaudible in the narrow-band audio signals 9, 20 of the invention, or at least nearly inaudible or perceptually inaudible.

This means that the narrow-band audio signal 9 will be readily playable or receivable by existing narrow-band terminals, that is, any previously known terminating equipment coupled to an existing narrow-band infrastructure. In such equipment, narrow-band audio signals of the invention will be recognised and dealt with as traditional signals. The embedded information will be of no use to such equipment, but will indeed invoke no disturbance either; if it should be audible, it will appear as noise.

One promising utilisation of the encoder and the decoder of the invention described above would be telephone apparatus, including telephone sets and mobile phones. If encoders and decoders of the invention are built into such telephones, wide-band speech connections will be readily possible when such equipment is coupled to the public telephone network.

If a telephone connection is established between such a telephone and a traditional telephone, the connection will of course be narrow-band. The traditional telephone will maybe reproduce the embedded information as a very light noise, and the telephone of the invention will just reproduce the narrow-band audio signal from the traditional telephone, as no information 22 (Fig. 2) will be present and thus no remaining spectral portions 24 will be merged into the narrow-band audio signal, but the connection will succeed without problems.

Whenever two telephones according to the invention are coupled together, however, a wide-band telephone connection will follow and consequently, a much higher signal quality will be experienced by the telephone subscribers. Such an enhanced connection quality could prove to be an important competition parameter on e.g. the still growing mobile phone market.

Specialised terminal equipment such as for interconnecting broadcasting studios when transmitting speaker or correspondent comments will also be able to benefit from the invention. To-day, such connections are most often made via the public telephone network resulting in quite poor transmission quality. Utilising the invention in such equipment will provide for much improved broadcast audio quality.

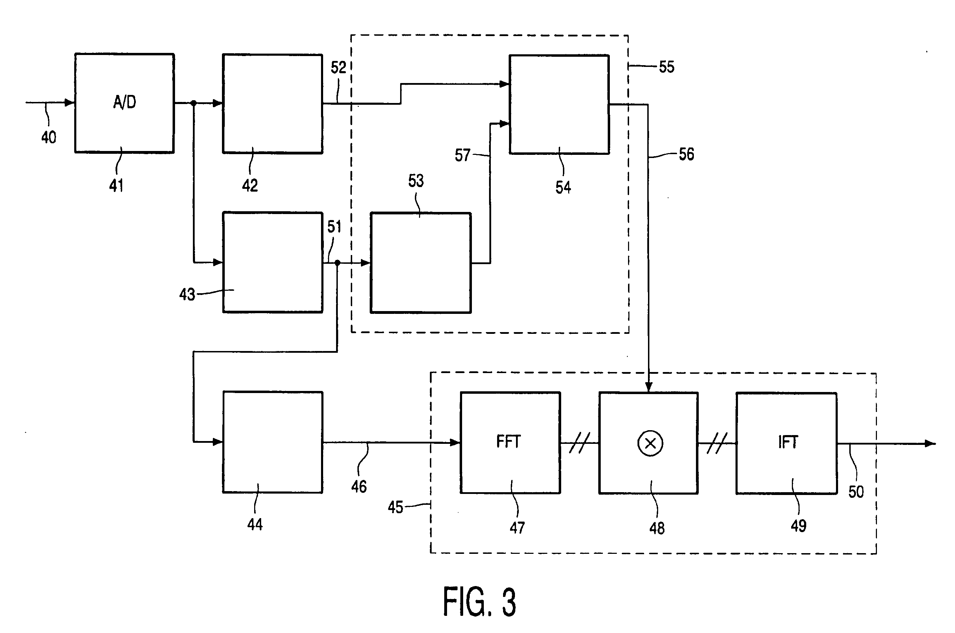

One preferred embodiment of an encoder of the invention is shown in Fig. 3. An analog wide-band audio signal 40 is converted into a digital wide-band audio signal in an A/D-converter 41, and subsequently filtered in two digital filters 42, 43. The digital filter 43 is a band-pass filter providing a first spectral portion 51 constituting a narrow-band audio signal, and the digital filter 42 may be a band-stop filter or a high-pass filter providing remaining spectral portion(s) 52 of the wide-band audio signal 40.

The first spectral portion 51 and the remaining spectral portions 52 are carried to an information generator 55. Here, the first spectral portion 51 is extrapolated in an extrapolator 53 to form a pseudo signal 57. The pseudo signal 57 may be compared to the remaining spectral portions 52 in a comparator 54 which provides a difference signal 56 at its output.

In a first version of the embodiment in Fig. 3, the pseudo signal 57 delivered by the extrapolator 53 comprises frequencies corresponding to those frequencies of the wide-band audio signal 40 which are not contained in the first spectral portion 51. That is, the spectrum of the pseudo signal corresponds to that of the remaining spectral portions 52.

The extrapolator is to be understood as being a comparatively simple circuit. Such circuits are previously known, and would be intended for enhancing a narrow-band audio signal in order to obtain a wide-band audio signal of a higher quality; usually with rather poor results, however.

The pseudo signal 57 is compared to the remaining spectral portions 52 in the comparator 54, and the mentioned difference signal is produced.

The object of this arrangement is to reduce the amount of information to be embedded into the first spectral portion. Even if the pseudo signal 57 may be a poor imitation of the remaining spectral portions 52, it may very well be so good that the amount of information in the difference signal 56 is significantly smaller than in the remaining spectral portions 52.

In a second version of the embodiment in Fig. 3, the pseudo signal 57 delivered by the extrapolator 53 contains the whole frequency spectrum of the wide-band audio signal 40.

In this case, the pseudo signal 57 is to be compared to the very wide-band audio signal 40 and hence, the digital filter 42 will be omitted. In this second version, the difference signal 56 will not necessarily be the same as in the first version, but will nevertheless generally represent the difference between the remaining spectral portions 52 and corresponding spectral portions of the pseudo signal 57.

The first spectral portion 51 is carried as well to a division circuit or framer 44 which segments the first spectral portion into frames. These frames 46 are carried on to an embedder 45.

In the embedder 45, each frame is first transformed from the time domain to the frequency domain in a Fast Fourier Transforming circuit 47. The Fourier coefficients are carried to a modifier 48 where they are modified in dependence of the difference signal 56, thus embedding the information in the difference signal 56 into the first spectral portion in the frequency domain.

The modified Fourier coefficients are carried to an Inverse Fourier Transforming circuit 49, where the modified first spectral portion is transformed from the frequency domain back to the time domain.

The resulting time domain signal 50 is similar to the first spectral portion 51 apart from the facts that it is segmented into frames, and that it has the difference signal 56 embedded into it.

The step of segmenting of the first spectral portion into frames is first of all incorporated into this embodiment of the decoder of the invention for the purpose of the embedding principle used. However, segmenting of the digital audio signal may serve other purposes as well.

In a third version of the embodiment in Fig. 3, the information generator is dispensed with, and the remaining spectral portions 52 are carried directly to the embedder instead of the difference signal 56. This will make the encoder simpler, but at the same time significantly enlarge the amount of information to be embedded.

In the modifier 48, the difference signal 56 or the remaining spectral portions 52, respectively, may preferably be represented in modifications of the Fourier coefficients by adding samples from a known sequence of binary words (a specific "watermark") to the absolute values of the Fourier coefficients. Said sequence will preferably comprise a number of binary words corresponding to the number of signal samples in each frame 46.

The sequence of said samples for each frame 46 may preferably be cyclically shifted in dependence of the value of the difference signal 56 or the remaining spectral portions 52, respectively, said value hereby in fact being represented by the amount of shift of the sequence of watermark samples.

Experiments have shown that the difference signal embedded into the first spectral portion to yield the narrow-band audio signal according to the invention does not deteriorate the narrow-band audio signal 50 to any significant extent, when the signal is reproduced by a piece of traditional narrow-band equipment.

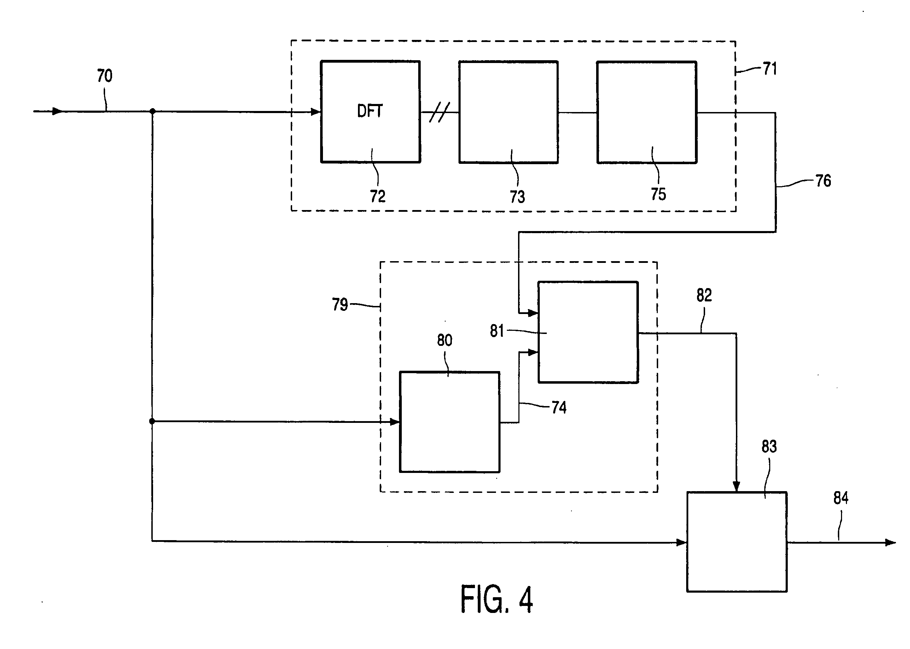

One preferred embodiment of a decoder of the invention is shown in Fig. 4. A digital, framed narrow-band audio signal 70 according to the invention is received at an input terminal, and is carried to an extractor 71, where any embedded information according to the invention is extracted from the narrow-band audio signal 70.

In the extractor 71, the framed narrow-band audio signal 70 is subjected to discrete Fourier transformation, and the Fourier coefficients carried to a cross correlation circuit 73.

In a preferred embodiment of this circuit corresponding to the preferred embodiment of the embedder 45 in Fig. 3, the correlation between the Fourier coefficients and the known watermark (same sequence of binary words as in Fig. 3) is established for each possible value of the cyclical shift of the watermark word used in the embedder 45.

This correlation will take on a significant value when the cyclical shift is the same as the shift used at the embedding, and in this way the embedded value (the "payload") may be identified and thus extracted. This extraction is symbolised by the box 75 representing a payload extraction circuit in Fig. 4. The extracted payload, corresponding to the difference signal 56 or the remaining spectral portions 52, respectively, will now appear at the terminal 76 in Fig. 4, from where it is supplied to a restorer 79, together with the received narrow-band audio signal 70.

In the restorer, the received narrow-band audio signal 70 is carried to the extrapolator 80, which supplies an extrapolated pseudo signal 74. This pseudo signal 74 is supplied to the corrector 81, where it is amended in dependence of the extracted payload 76. It is essential that the pseudo signal 74 corresponds to the pseudo signal 57 in Fig. 3.

In a first version of the embodiment in Fig. 4, the pseudo signal 74 delivered by the extrapolator 80 comprises frequencies corresponding to those frequencies of the wide-band audio signal 40 which are not contained in the first spectral portion 51, in a way corresponding to the first version of the encoder of Fig. 3.

In this version, the payload 76 will constitute a difference signal which will be added to the pseudo signal 74, and the sum signal 82 will correspond to the remaining spectral portions 52. These are now merged with the received narrow-band audio signal 70 in a merging circuit 83, and the output signal 84 from the merging circuit 83 will constitute the restored wide-band audio signal.

In a second version of the embodiment in Fig. 4 to be used together with the second version of the encoder of Fig. 3, the pseudo signal 74 delivered by the extrapolator 80 contains the whole frequency spectrum of the original wide-band audio signal 40.

In that case, the payload 76 will nevertheless generally represent the difference between the remaining spectral portions 52 and corresponding spectral portions of the pseudo signal 74. Adding this difference to the pseudo signal 74 will again yield a sum signal 82 corresponding to the remaining spectral portions 52, which is merged with the received narrow-band audio signal 70 to obtain a restored wide-band audio signal 84.

In a third version of the decoder in Fig. 4, corresponding to the third version of the encoder in Fig. 3, the payload will correspond to the entire remaining spectral portions 52 and will be carried directly to the merging circuit 83. In this case, the restorer 79 will be omitted.

The three versions of the encoder of Fig. 3 and the corresponding versions of the decoder of Fig. 4 now constitute three embodiments of encoder-decoder pairs according to the invention, for transmitting a wide-band audio signal along a narrow-band infrastructure. The wide-band audio signal is encoded at the transmitting end and decoded at the receiving end.

The narrow-band infrastructure need not be a transmission channel, however, but can be any narrow-band structure such as e.g. a storage system. In that case, a wide-band audio signal may be stored in the form of a narrow-band audio signal according to the invention, and at retrieval from storage decoded into wide-band form as described with reference to Figs 2 and 4. Hereby is obtained an effective compression of the wide-band audio signal. The benefits obtained from such a system have been discussed in the first part of the present specification.

It lies within the invention to design frequency limits for the first spectral portion which provide a greater degree of compression for any desired reproduction quality level.

Similarly, the narrow-band audio signal of the invention may be subjected to any other form of narrow-band audio signal processing or structure, providing corresponding benefits.

Even if reference is made above to specific ways of embedding restoring information into the first spectral portion, including the use of embedding methods known from watermarking of signals, it lies within the scope of the invention to use any method for the embedding of the restoring information into the first spectral portion, and for subsequent extraction of said information.

Even if reference is made above to wide-band audio signals in general, it is considered particularly advantageous to apply the invention to wide-band speech signals.

Speech constitutes an audio signal where the indispensable parts of the signal necessary for understanding of the spoken message is contained in a well defined spectral portion of the signal, i.e. the 300-3.400 Hz frequency band. This band may be transmitted or stored, respectively, without any alterations when using the invention, whereas the remaining spectral portions need not necessarily be reproduced with the same fidelity as the 300-3.400 Hz frequency band.

Thus, reproducing the remaining spectral portions may be done to a lower standard when reproducing speech signals than, say, music. In this way, the invention can be utilised to select a lower but still acceptable quality of reproduction to be utilised and thus savings in processing power.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

## Claims

1. A method for processing a wide-band audio signal (1; 40) into a narrow-band audio signal (9; 50) comprising substantially the same information as the wide-band audio signal, where a first spectral portion (4; 51) of the wide-band audio signal is maintained substantially unchanged in the narrow-band audio signal and restoring information (7; 56) usable for restoring the remaining spectral portions (5; 52) of the wide-band audio signal is embedded into said first spectral portion, as a watermark carrying said restoring information as a payload, **characterized in that** the watermark is embedded into said first spectral portion by:
- providing said first spectral portion (51) and said remaining spectral portions (52) in digital form;
- organising said first spectral portion (51) into frames (46);
- Fourier transforming (47) said frame;
- modifying (48) the Fourier coefficients in dependence of said watermark; and
- inverse Fourier transforming (49) the modified Fourier coefficients for the obtainment of a time domain, watermarked frame.

2. A method according to claim 1, wherein said narrow-band audio signal is reprocessed into a wide-band audio signal, after transmitting said narrow-band audio signal through a transmission channel or storing it on a storage medium.

3. An encoder for coding a wide-band audio signal (1; 40) into a narrow-band audio signal (9; 50) comprising substantially the same information as the wide-band audio signal, comprising:
- a filter (2; 43) for extracting a first spectral portion (4; 51) from the wide-band audio signal;
- an information generating circuit (6; 55) for extracting restoring information (7; 56) from the wide-band audio signal or from remaining spectral portions (5; 52) of the wide-band audio signal, said information being usable for restoring said remaining spectral portions of the wide-band audio signal;
- an embedder (8; 45) for embedding said restoring information in said first spectral portion, in the form of a watermark carrying said restoring information as a payload, for the obtainment of said narrow-band audio signal, **characterized in that** the information generating circuit (55) comprises:
- an extrapolator (53) for extrapolating said first spectral portion (51) into an extrapolated audio signal (57) having frequency limits substantially corresponding to those of the wide-band audio signal; and
- a comparator (54) for comparing said extrapolated audio signal to the wide-band audio signal (40) or to said remaining spectral portions (52) and providing said restoring information (56) in dependence of the comparison.

4. A decoder for decoding a narrow-band audio signal (20; 70) containing restoring information usable for processing the signal into a corresponding wide-band audio signal (27; 84), comprising:
- an extractor (21; 71) for extracting said restoring information (22; 76),
- a restoring circuit (23; 79) for restoring one or more spectral audio signal portions (24; 82) using said restoring information and merging (26; 83) said spectral audio signal portions with said narrow-band audio signal for the obtainment of said corresponding wide-band audio signal, **characterized in that** the restoring circuit (79) comprises:
- an extrapolator (80) for extrapolating said narrow-band audio signal into an extrapolated audio signal (74) having frequency limits substantially corresponding to those of the corresponding wide-band audio signal; and
- a corrector (81) for modifying characteristics of said extrapolated audio signal in dependence of said restoring information.

5. A system for transmitting a wide-band audio signal through a narrow-band transmission channel, **characterised in** comprising an encoder according to claim 3 at the transmitting end for processing the wide-band audio signal into a narrow-band audio signal, and a decoder according to claim 4 at the receiving end for reprocessing said narrow-band audio signal into a wide-band audio signal.

6. A system for storing a wide-band audio signal on a storage medium and retrieving the wide-band audio signal from storage, **characterised in** comprising an encoder according to claim 3 for processing the wide-band audio signal into a narrow-band audio signal before the storage, and a decoder according to claim 94 for reprocessing the stored narrow-band audio signal into a wide-band audio signal after the retrieval from storage.

7. A reproduction apparatus comprising a decoder as claimed in claim 4.

8. A transmitter comprising an encoder as claimed in claim 3.

## Patentansprüche

1. Verfahren zum Verarbeiten eines breitbandigen Audiosignals (1; 40) zu einem schmalbandigen Audiosignal (9; 50), das im Wesentlichen dieselben Informationen wie das breitbandige Audiosignal umfasst, wobei ein erster Spektralanteil (4; 51) des breitbandigen Audiosignals im Wesentlichen unverändert im schmalbandigen Audiosignal beibehalten wird und Wiederherstellungsinformationen (7; 56), die zum Wiederherstellen der übrigen Spektralanteile (5; 52) des breitbandigen Audiosignals verwendbar sind, in den ersten Spektralanteil als ein Wasserzeichen eingebettet sind, das die Wiederherstellungsinformationen als Nutzdaten transportiert, **dadurch gekennzeichnet, dass** das Wasserzeichen in den ersten Spektralanteil eingebettet ist durch:
- Bereitstellen des ersten Spektralanteils (51) und der übrigen Spektralanteile (52) in digitaler Form;
- Organisieren des ersten Spektralanteils (51) in Rahmen (46);
- Fourier-Transformieren (47) des Rahmens;
- Modifizieren (48) der Fourier-Koeffizienten in Abhängigkeit vom Wasserzeichen und
- inverses Fourier-Transformieren (49) der modifizierten Fourier-Koeffizienten zur Erlangung eines Zeitbereichs-Rahmens mit Wasserzeichen.

2. Verfahren nach Anspruch 1, wobei das schmalbandige Audiosignal nach Übertragen des schmalbandigen Audiosignals durch einen Übertragungskanal hindurch oder Speichern desselben auf einem Speichermedium zu einem breitbandigen Audiosignal wiederaufbereitet wird.

3. Codierer zum Codieren eines breitbandigen Audiosignals (1; 40) in ein schmalbandiges Audiosignal (9; 50), das im Wesentlichen dieselben Informationen wie das breitbandige Audiosignal umfasst, mit:
- einem Filter (2; 43) zum Extrahieren eines ersten Spektralanteils (4; 51) aus dem breitbandigen Audiosignal;
- einer Informationsgenerierungsschaltung (6; 55) zum Extrahieren von Wiederherstellungsinformationen (7; 56) aus dem breitbandigen Audiosignal oder aus übrigen Spektralanteilen (5; 52) des breitbandigen Audiosignals, wobei die Informationen zum Wiederherstellen der übrigen Spektralanteile des breitbandigen Audiosignals verwendbar sind;
- einem Embedder (8; 45) zum Einbetten der Wiederherstellungsinformationen in dem ersten Spektralanteil in der Form eines Wasserzeichen, das die Wiederherstellungsinformationen als Nutzdaten transportiert, für die Erlangung des schmalbandigen Audiosignals, **dadurch gekennzeichnet, dass** die Informationsgenerierungsschaltung (55) umfasst:
- einen Extrapolator (53) zum Extrapolieren des ersten Spektralanteils (51) in ein extrapoliertes Audiosignal (57), das Frequenzgrenzen aufweist, die im Wesentlichen jenen des breitbandigen Audiosignals entsprechen; und
- einen Komparator (54) zum Vergleichen des extrapolierten Audiosignals mit dem breitbandigen Audiosignal (40) oder den übrigen Spektralanteilen (52) und Bereitstellen der Wiederherstellungsinformationen (56) in Abhängigkeit vom Vergleich.

4. Decodierer zum Decodieren eines schmalbandigen Audiosignals (20; 70), das Wiederherstellungsinformationen enthält, die zum Verarbeiten des Signals zu einem entsprechenden breitbandigen Audiosignal (27; 84) verwendbar sind, mit:
- einem Extraktor (21; 71) zum Extrahieren der Wiederherstellungsinformationen (22; 76),
- einer Wiederherstellungsschaltung (23; 79) zum Wiederherstellen eines oder mehrerer Audiosignal-Spektralanteile (24; 82) unter Verwendung der Wiederherstellungsinformationen und Mischen (26; 83) der Audiosignal-Spektralanteile mit dem schmalbandigen Audiosignal zur Erlangung des entsprechenden breitbandigen Audiosignals, **dadurch gekennzeichnet, dass** die Wiederherstellungsschaltung (79) umfasst:
- einen Extrapolator (80) zum Extrapolieren des schmalbandigen Audiosignals in ein extrapoliertes Audiosignal (74), das Frequenzgrenzen aufweist, die im Wesentlichen jenen des entsprechenden breitbandigen Audiosignals entsprechen; und
- einen Korrektor (81) zum Modifizieren von Charakteristika des extrapolierten Audiosignals in Abhängigkeit von den Wiederherstellungsinformationen.

5. System zum Übertragen eines breitbandigen Audiosignals durch einen schmalbandigen Übertragungskanal hindurch, **gekennzeichnet durch** Umfassen eines Codierers nach Anspruch 3 am Sendeende zum Verarbeiten des breitbandigen Audiosignals zu einem schmalbandigen Audiosignal und eines Decodierers nach Anspruch 4 am Empfangsende zum Wiederaufbereiten des schmalbandigen Audiosignals zu einem breitbandigen Audiosignal.

6. System zum Speichern eines breitbandigen Audiosignals auf einem Speichermedium und Abrufen des breitbandigen Audiosignals aus dem Speicher, **gekennzeichnet durch** Umfassen eines Codierers nach Anspruch 3 zum Verarbeiten des breitbandigen Audiosignals zu einem schmalbandigen Audiosignal vor der Speicherung und eines Decodierers nach Anspruch 4 zum Wiederautbereiten des gespeicherten schmalbandigen Audiosignals zu einem breitbandigen Audiosignal nach dem Abruf aus dem Speicher.

7. Reproduktionsgerät mit einem Decodierer nach Anspruch 4.

8. Sender mit einem Codierer nach Anspruch 3.

## Revendications

1. Procédé de traitement d'un signal audio à large bande (1 ; 40) en un signal audio à bande étroite (9 ; 50) comprenant sensiblement les mêmes informations que le signal audio à large bande, dans lequel une première partie spectrale (4 ; 51) du signal audio à large bande reste pratiquement inchangée dans le signal audio à bande étroite et des informations de rétablissement (7 ; 56) utilisables pour rétablir les parties spectrales restantes (5 ; 52) du signal audio à large bande sont intégrées dans ladite première partie spectrale, sous la forme d'un filigrane comportant lesdites informations de rétablissement sous la forme de données utiles, **caractérisé en ce que** le filigrane est intégré dans ladite première partie spectrale en :
- fournissant ladite première partie spectrale (51) et lesdites parties spectrales restantes (52) sous une forme numérique ;
- organisant ladite première partie spectrale (51) en trames (46) ;
- transformant par transformation de Fourier (47) ladite trame ;
- modifiant (48) les coefficients de Fourier en fonction dudit filigrane, et
- transformant par transformation de Fourier inverse (49) les coefficients de Fourier modifiés pour l'obtention d'une trame à filigrane dans le domaine temporel.

2. Procédé suivant la revendication 1, dans lequel ledit signal audio à bande étroite est retraité en un signal audio à large bande, après transmission dudit signal audio à bande étroite par l'intermédiaire d'un canal de transmission ou le stockage de celui-ci sur un support de mémorisation.

3. Codeur pour coder un signal audio à large bande (1 ; 40) en un signal audio à bande étroite (9 ; 50) comprenant sensiblement les mêmes informations que le signal audio à large bande, comprenant :
- un filtre (2 ; 43) pour extraire une première partie spectrale (4 ; 51) du signal audio à large bande ;
- un circuit de génération d'informations (6 ; 55) pour extraire des informations de rétablissement (7;56) du signal audio à large bande ou de parties spectrales restantes (5 ; 52) du signal audio à large bande, lesdites informations étant utilisables pour rétablir lesdites parties spectrales restantes du signal audio à large bande ;
- un intégrateur (8 ; 45) pour intégrer lesdites informations de rétablissement dans ladite première partie spectrale, sous la forme d'un filigrane comportant lesdites informations de rétablissement sous la forme de données utiles, pour l'obtention dudit signal audio à bande étroite, **caractérisé en ce que** le circuit de génération d'informations (55) comprend :
- un extrapolateur (53) pour extrapoler ladite première partie spectrale (51) en un signal audio extrapolé (57) ayant des limites de fréquence correspondant sensiblement à celles du signal audio à large bande, et
- un comparateur (54) pour comparer ledit signal audio extrapolé au signal audio à large bande (40) ou auxdites parties spectrales restantes (52) et fournir lesdites informations de rétablissement (56) en fonction de la comparaison.

4. Décodeur pour décoder un signal audio à bande étroite (20 ; 70) contenant des informations de rétablissement utilisables pour traiter le signal en un signal audio à large bande (27 ; 84) correspondant, comprenant :
- un extracteur (21 ; 71) pour extraire lesdites informations de rétablissement (22 ; 76) ;
- un circuit de rétablissement (23 ; 79) pour rétablir une ou plusieurs parties de signal audio spectrales (24 ; 82) en utilisant lesdites informations de rétablissement et fusionner (26 ; 83) lesdites parties de signal audio spectrales avec ledit signal audio à bande étroite pour l'obtention dudit signal audio à large bande correspondant, **caractérisé en ce que** le circuit de rétablissement (79) comprend :
- un extrapolateur (80) pour extrapoler ledit signal audio à bande étroite en un signal audio extrapolé (74) ayant des limites de fréquence correspondant sensiblement à celles du signal audio à large bande correspondant, et
- un correcteur (81) pour modifier les caractéristiques dudit signal audio extrapolé en fonction desdites informations de rétablissement.

5. Système pour transmettre un signal audio à large bande par l'intermédiaire d'un canal de transmission à bande étroite, **caractérisé en ce qu'**il comprend un codeur suivant la revendication 3 à l'extrémité d'émission pour traiter le signal audio à large bande en un signal audio à bande étroite, et un décodeur suivant la revendication 4 à l'extrémité de réception pour retraiter ledit signal audio à bande étroite en un signal audio à large bande.

6. Système pour stocker un signal audio à large bande sur un support de mémorisation et extraire le signal audio à large bande du support de mémorisation, **caractérisé en ce qu'**il comprend un codeur suivant la revendication 3 pour traiter le signal audio à large bande en un signal audio à bande étroite avant le stockage, et un décodeur suivant la revendication 4 pour retraiter le signal audio à bande étroite stocké en un signal audio à large bande après l'extraction du support de mémorisation.

7. Appareil de reproduction comprenant un décodeur suivant la revendication 4.

8. Emetteur comprenant un codeur suivant la revendication 3.
